# EUROPÄISCHE PATENTSCHRIFT

(11) **EP 4 267 882 B1**
(45) Veröffentlichungstag und Bekanntmachung des Hinweises auf die Patenterteilung: **02.04.2025**
(21) Anmeldenummer: 21839889.9
(22) Anmeldetag: 15.12.2021
(51) Int. Cl.: F17C 13/04

(54) **DRUCKTANK FÜR GASBETRIEBENES FAHRZEUG**
PRESSURE TANK FOR GAS-OPERATED VEHICLE
RÉSERVOIR SOUS PRESSION POUR VÉHICULE FONCTIONNANT AU GAZ

(30) Priorität: 22.12.2020 DE 102020134633
(43) Veröffentlichungstag der Anmeldung: 01.11.2023
(60) Teilanmeldung: 24194451.1
(73) Patentinhaber: Voith HySTech GmbH, 85748 Garching (DE)
(72) Erfinder: BLEISCHWITZ, Mark, 80636 München (DE); LANZL, Thomas, 93192 Wald (DE); BRÜHLER, Jürgen, 85416 Unterschleißheim (DE); KLEIN, Gordej, 85417 Marzling (DE)
(74) Vertreter: Voith Patent GmbH - Patentabteilung
(86) Internationale Anmeldenummer: PCT/EP2021/085836
(87) Internationale Veröffentlichungsnummer: WO 2022/136045

(56) Entgegenhaltungen:
- WO-A1-2017/200206
- DE-A1- 102010 021 667
- DE-A1- 102016 219 638
- DE-B4- 102014 009 343
- US-A- 4 614 279
- US-A- 5 376 200
- US-A- 5 938 209

## Beschreibung

Die Erfindung betrifft einen Drucktank für die Speicherung von Gas zur Montage in einem gasbetriebenen Fahrzeug, wobei der Drucktank eine rotationssymmetrische, langgestreckte Form hat, die im Mittelbereich zylinderförmig und an beiden Enden mit gewölbten Polkappen abgeschlossen ist. Der Drucktank weist eine Wandung, die einen Hohlraum zur Speicherung des Gases umschließt, sowie ein metallisches Anschlussstück, einen sogenannten Boss, an jeder der Polkappen auf, wobei die Wandung eine Verstärkungsschicht aus faserverstärktem Kunststoff und einen innenliegenden Liner zur Abdichtung umfasst.

Weiterhin betrifft die Erfindung ein Verfahren zur Herstellung eines solchen Drucktanks beziehungsweisen eines Vorproduktes für einen solchen Drucktank, wobei für den Aufbau der Wandung des Drucktanks ein Liner in einem Blasformverfahren hergestellt wird, welcher den Hohlraum zur Speicherung des Gases umschließt.

Gasbetriebene Fahrzeuge haben beispielsweise einen Gasmotor oder eine Brennstoffzelle mit Elektromotor als Antrieb. Um ausreichend Treibstoff speichern zu können, wird das Gas, das unter anderem Wasserstoff sein kann, unter hohem Druck im Tank gespeichert. Typisch für solche Drucktanks sind Drücke von über 200 bar, oftmals bis 600 bar und teilweise sogar bis 700 oder 800 bar. Das heißt dass der Drucktank nicht nur gasdicht unter diesem Druck sein muss, sondern auch dass er eine hohe mechanische Stabilität benötigt.

Im Stand der Technik sind Drucktanks für gasbetriebene Fahrzeuge bekannt. Diese Drucktanks weisen eine Wandung auf, die zur Abdichtung einen innenliegenden Liner, beispielsweise aus Thermoplast, und zur Schaffung der mechanischen Stabilität eine Verstärkungsschicht aus faserverstärktem Kunststoff umfasst. Bevorzugt ist die Verstärkungsschicht gewickelt und als CFK-Schicht ausgeführt. CFK steht für Kohlenfaserverstärkten Kunststoff.

Der Boss hat eine Durchgangsbohrung und ein Anschlussgewinde. Bei zumindest einem der beiden Bosse ist eine Tankarmatur angeschlossen, die es ermöglicht, den Drucktank zu befüllen oder kontrolliert Gas zu entnehmen. Am anderen Boss ist die Durchgangsöffnung mit einem Verschluss abgedichtet oder es ist dort eine weitere Tankarmatur oder ein Sicherheitsventil vorgesehen.

Ein besonderes Augenmerk muss bei solchen Drucktanks auf die Anbindung zwischen dem metallischen Anschlussstück, dem Boss, und dem Liner gelegt werden, da hier besonders gute Dichtigkeit gefordert ist und das auch bei mechanischer Belastung, bei wechselndem Innendruck oder bei großen Temperaturschwankungen. Insbesondere bei Wasserstoff-Tanks ist das eine große Herausforderung.

In der DE 102014009343 A1 wird ein Drucktank beschrieben, der die oben genannten Merkmale aufweist. Um die Dichtigkeit zu verbessern, wird dort eine Klemmhülse zwischen Verstärkungsschicht und Liner vorgesehen. Die Klemmhülse soll äußere Belastungen, die über den Boss wirken, an die Verstärkungsschicht übertragen und so den Liner vor Überlastung schützen, welche zu Undichtigkeit führen kann.

Die DE 102010021667 A1 sieht einen Dichtring zwischen Boss und Liner vor, der die Dichtheit gewährleisten soll. In der DE 102016219638 A1 wird ein Dichtring von einer Verriegelungshülse in einen Spalt zwischen Boss und Liner gedrückt, um eine Abdichtung zwischen Liner und Boss zu erreichen.

Eine weitere Ausführung wird in der WO 2017/20026 A1 beschrieben. Zur Abdichtung am Boss wird eine Buchse, sowie ein Druckring und ein Federelement verwendet, welches den Druckring an den Liner und damit diesen an den Boss drückt.

Die Ausführungen nach dem Stand der Technik haben allerdings den Nachteil, dass sie nicht gut genug gegen wechselnde Belastungen wirken, sei es aufgrund von Temperaturschwankungen oder aufgrund von wechselnden Druckbelastungen, und so auch keine langzeitstabile Abdichtung gewährleisten.

Eine gute und langlebige Abdichtung ist aber besonders wichtig bei größeren Drucktanks vor allem für Wasserstoff, wie sie beispielsweise für Nutzfahrzeuge, die mit Brennstoffzelle angetrieben sind, nötig werden. Solche Drucktanks können Durchmesser von bis zu 600 mm und Längen von 2500 mm erreichen. Bisher bekannte Abdichtkonzepte sind da nicht ausreichend.

Die Aufgabe der Erfindung ist es nun, einen Drucktank zu entwickeln, der eine bessere Dichtigkeit und eine hohe Lebensdauer mit geringer Leckage besitzt, sowie ein Verfahren aufzuzeigen, in dem solche Drucktanks einfach und zuverlässig herzustellen sind.

Die Aufgabe wird zum einen durch einen Drucktank gemäß Anspruch 1 gelöst. Weitere vorteilhafte Merkmale sind in den jeweiligen abhängigen Ansprüchen genannt.

Erfindungsgemäß zeichnet sich der Drucktank nach Anspruch 1 dadurch aus, dass zur Abdichtung eine mit dem Boss verbundene Buchse, ein Druckring und ein Federelement vorhanden sind, derart gestaltet, dass das Federelement sich an der Buchse abstützt und den Druckring an den Liner und diesen dadurch in einem Bereich an den Boss drückt. Dieser Bereich ist eine Fläche und bevorzugt als ringförmige Fläche ausgebildet.

Ein wesentlicher Vorteil der erfindungsgemäßen Ausführung besteht darin, dass aufgrund des Federelements und aufgrund der zweiteiligen Ausführung mit Buchse und Druckring eine Vorspannung zur Abdichtung auf die Dichtfläche zwischen Liner und Boss aufgebracht werden kann. Die Dichtfläche befindet sich in dem Bereich, in dem der Liner an den Boss angedrückt wird. Aufgrund der so erzeugten Vorspannung ist beispielsweise auch bei geringem Innendruck oder bei Ausdehnungen durch Temperaturunterschiede immer eine ausreichende Dichtigkeit gegeben. Durch eine abgestimmte Einstellung der Federkraft kann zudem eine Überpressung des Liners und damit eine Verformung, die zu Undichtigkeit führt, vermieden werden.

Unter Federelement wird hier ein Element verstanden, dass bei Komprimierung eine ausreichende elastische Federkraft aufbringen kann. Beispielsweise kann es als ringförmiges Element aus Federstahl ausgeführt sein, welches sogenannte Federflügel aufweist, insbesondere kann das Federelement einen U-förmigen oder V-förmigen Querschnitt haben. Alternativ kann das Federelement auch aus mehreren Blattfedern oder Spiralfedern gebildet werden, welche zwischen Buchse und Druckring angeordnet sind. Auch andere Arten und Formen von Federn können hier eingesetzt werden. Insbesondere kann das Federelement als sogenannte Tellerfeder ausgeführt sein. Die Tellerfeder kann einen oder mehrere Federteller aufweisen. Unter anderem über die Anzahl der hintereinander angeordneten Federteller kann die Federstärke eingestellt werden.

Als weitere Federmaterialien können beispielsweise elastische Polymere (Elastomere oder vernetzte Thermoplaste) oder Federelemente aus Faserverbundkunststoffen eingesetzt werden.

Besonders vorteilhaft ist das Federelement so ausgeführt ist, dass es eine Richtung hat, in der die Federkraft zum Andrücken wirkt, welche mit der Längsachse L des Drucktanks einen Winkel von höchstens +/- 20° einschließt und welche insbesondere im Wesentlichen parallel zur Längsachse L ausgerichtet ist. Eine solche Ausrichtung bietet die Möglichkeit, die Federvorspannung von außen durch die Zentralbohrung des Bosses einstellen und verändern zu können. Zudem bietet es Vorteile bei der Montage.

In einer weiteren bevorzugten Ausführung berührt der Druckring den Liner mit einer Fläche, die einen Winkel zur Längsachse L zwischen 70° und 110° bildet, und die insbesondere im Wesentlichen senkrecht zur Längsachse L ausgerichtet ist. Auch das ist für die Montage und die Einstellbarkeit von Vorteil.

Bevorzugt ist die Buchse so angeordnet, dass sie keinen flächigen Kontakt mit dem Liner hat. Die Anpressung zur Abdichtung wird nur über die Fläche des Druckrings übertragen.

Um die Funktion dauerhaft zu gewährleisten ist es von Vorteil, wenn der Druckring zusammen mit der Buchse das Federelement vollständig umschließt. So ist das Federelement geschützt und bleibt in der gewünschten Position. Zudem bietet diese Ausführung auch eine einfachere Montage. Diese Vorteile wirken sich unter anderem auch schon bei der Erzeugung des Liners im Blasformverfahren positiv aus. Unter vollständig umschließen fällt in diesem Sinne auch, wenn noch einzelne Öffnungen oder Spalte vorhanden sind. Es muss nicht vollständig abgekapselt sein.

Zudem ist der Druckring bevorzugt in seiner dem Federelement zugewandten Kontur so ausgeführt, dass das Federelement formschlüssig an der Kontur anliegt. So wird eine große Kontaktfläche zwischen Federelement und Druckring genutzt, die eine gleichmäßige Kraftübertragung auf die Dichtfläche gewährleistet.

In einer bevorzugten Variante ist die Buchse über ein Schraubgewinde am Boss befestigt, insbesondere derart, dass die Kraft, mit der der Druckring angedrückt wird, darüber verändert werden kann. So kann beispielsweise die Buchse ein Außengewinde aufweisen, das in ein Innengewinde am Boss eingreift. Durch die unterschiedlich tiefe Einschraubung der Buchse in den Boss kann die Feder zwischen Buchse und Druckring unterschiedlich stark komprimiert werden. So kann die Vorspannung gezielt eingestellt werden.

Alternativ kann die Buchse über eine Klemmung am Boss befestigt sein. Die Klemmung muss dabei so ausgeführt sein, dass sie nicht durch die Federkraft gelöst werden kann.

Weiterhin kann die Buchse einen Kragen aufweisen, an dem sich das Federelement abstützt, wobei der Kragen im Wesentlichen senkrecht zur Längsachse L des Drucktanks angeordnet ist. So wird eine gute Montierbarkeit und eine gute Kraftübertragung erreicht.

In einer vorteilhaften Ausführung weist der Boss ein Außengewinde auf, welches in Kontakt mit dem Liner ist. So wird eine gute mechanische Verbindung zwischen Liner und Boss erzeugt, die eine gute Stabilität beim Herstellen der Verstärkungsschicht bietet. Die Verstärkungsschicht wird meist in einem Wickelverfahren erzeugt, bei dem hohe radiale Kräfte auftreten.

Um eine ausreichende Dichtfläche zwischen Liner und Boss zu erzeugen, ist es vorteilhaft, wenn sich die Fläche des Druckrings, die an den Liner gedrückt wird, in Radialrichtung R mindestens 20 mm, bevorzugt mindestens 30 mm erstreckt. Als Obergrenze ist eine Erstreckung von maximal 100 mm sinnvoll, um nicht zu viel Bauraum zu benötigen.

Die Dichtigkeit des Drucktanks kann noch verbessert werden, wenn der Boss Erhebungen aufweist, die sich auf der Fläche des Bosses befinden, an die der Liner durch den Druckring angedrückt wird. Dieser Bereich des Bosses wird auch als Dichtfläche bezeichnet. Die Erhebungen sind bevorzugt als konzentrische Ringe um die Längsachse L ausgeführt. Beim Andrücken des Druckrings an den Liner durch das Federelement, werden die Erhebungen auf dem Boss auf der gegenüber zum Druckring liegenden Seite in den Liner hineingedrückt. Dadurch wird die Dichtigkeit zwischen Liner und Boss signifikant erhöht. Besonders wirkt sich diese Verbesserung bei niedrigem Innendruck im Drucktank aus. So kann der Drucktank bis auf ein niedrigeres Druckniveau entleert werden, ohne dass Leckagen zu befürchten sind.

Die Erhebungen sind nur einige Zehntel-Millimeter, bevorzugt zwischen 0,3 und 1,5 mm, besonders bevorzugt zwischen 0,5 und 1 mm hoch. So dass sie sich zwar in den Liner etwas hineindrücken, diesen aber nicht beschädigen oder gar Risse erzeugen. Die Erhebungen können beispielsweise einen halbrunden oder eine dreieckigen oder einen ähnlichen Querschnitt aufweisen.

Ebenso kann die Abdichtung noch verbessert werden, indem der Boss eine Nut aufweist, in der ein Dichtring vorgesehen ist, wobei die Nut so angeordnet ist, dass der Dichtring mit dem Liner in Kontakt kommt. Zusätzlich befindet sich die Nut in dem Bereich des Bosses, in dem der Liner durch den Druckring an den Boss gedrückt wird. So wird der Liner durch den Druckring auch an den Dichtring gedrückt. Der Dichtring kann damit kleinere Lageveränderungen des Liners ausgleichen ohne dass die Abdichtung verringert wird. Zusätzlich zum Dichtring kann bevorzugt ein Stützring verwendet werden. Durch den Behälterinnendruck und die Federvorspannung schmiegt sich der Liner an den Stützring an und sorgt dafür, dass kein Spalt zwischen diesen beiden entstehen kann. Dadurch kann der Dichtring nicht in einen Spalt zwischen Liner und Boss gedrückt werden.

Damit die Vorspannung gut aufgebaut wird und eine gute Abdichtung erzielt wird, ist der Druckring gegenüber der Buchse in Richtung der Längsachse L verschiebbar ist. So kann der Druckring so steif ausgeführt werden, dass eine gleichmäßige Anpressung über die Fläche und damit eine zuverlässige Abdichtung erreicht wird.

Weiter verbessert wird die Ausführung, wenn der Druckring einen Anschlag und/oder die Buchse einen Anschlag aufweist, welche derart gestaltet sind, dass eine starre Kraftübertragung zwischen Druckring und Buchse in Richtung der Längsachse L über das vollständig komprimierte Federelement möglich ist. Unter vollständig komprimiert wird hier verstanden, dass das Federelement so weit zusammengedrückt wird, dass eine starre Kraftübertragung über das Federelement erfolgt und keine elastische Kraftübertragung, die von der Federkraft abhängt.

So kann zur Erzeugung einer größeren Anpresskraft zwischen Liner und Boss, als sie das Federelement aufbringen kann, die Verschraubung zwischen Boss und Buchse so angezogen werden, dass die Kraft über den oder die Anschläge von der Buchse auf den Druckring übertragen wird.

Insbesondere wenn Erhebungen am Boss vorhanden sind, die sich in den Liner eindrücken sollen, bietet das Vorteile. So kann bei der Montage des Bosses auf die Buchse eine sehr viel höhere Anpresskraft erzeugt werden, wodurch die Erhebungen gut in den Liner eingedrückt werden. Beispielsweise kann durch die Verschraubung eine Anpresskraft von bis zu 40 kN aufgebracht werden, während die als Federelement verwendete Tellerfeder zum Beispiel nur 5 kN Rückstellkraft aufweist. Später im Betrieb des Drucktanks wäre eine zu hohe Anpresskraft schädlich, da das Linermaterial fliesen und aus dem Bereich der Andrückfläche herausgedrückt würde. Daher kann die Federkraft nicht so hoch gewählt werden. Ein nach der Montage anfänglich auftretendes Fließen des Linermaterials sorgt dafür, dass ein kleiner Spalt zwischen dem oder den Anschlägen und der jeweiligen Gegenfläche entsteht und somit die Andrückkraft im Betreib des auf den Wert der Federkraft reduziert wird. Dieser Wert ist so ausgelegt, dass der Liner dem dauerhaft standhalten kann. Aufgrund der bei der Montage wirkenden erhöhten Anpresskraft sind die Erhebungen am Boss gut in den Liner eingedrückt und sorgen für eine verbesserte Abdichtung.

Des Weiteren kann eine starre Kraftübertragung zwischen Buchse und Druckring auch während des Blasformens von Vorteil sein, um die Komponenten in der gewünschten Position zu halten.

Zum anderen wird die Aufgabe ebenso durch ein Verfahren zur Herstellung eines zuvor beschriebenen erfindungsgemäßen Drucktanks oder eines Vorproduktes für einen solchen gemäß Anspruch 12 gelöst. Weitere vorteilhafte Merkmale sind in den jeweiligen abhängigen Verfahrensansprüchen genannt.

Das Verfahren zeichnet sich dadurch aus, dass eine mit einem Boss verbindbare Buchse, ein Druckring und ein Federelement an einem sogenannten Blasdorn angeordnet sind, während der Liner im Blasformverfahren hergestellt wird, derart dass sich der Druckring und das Federelement nach der Herstellung des Liners auf der Innenseite des Liners befinden, wobei das Federelement sich an der Buchse abstützen und den Druckring an den Liner und diesen an eine Fläche eines Bosses drücken kann, wenn die Buchse mit einem Boss verbunden wird.

Beim Blasformverfahren wird der Kunststoff für den Liner aus einer Düse extrudiert, so dass zunächst ein Schlauch entsteht. Dann werden zwei oder mehr Teile des Blasformwerkzeuges zusammengebracht, so dass sich eine Kavität in Form des zu bildenden Liners für den Drucktank bildet. In dieser Kavität befindet sich der extrudierte Schlauch. Über den sogenannten Blasdorn, ein Mundstück, wird Gas in den Schlauch eingeblasen, wodurch sich dieser an die Innenseite des Blasformwerkzeuges anlegt. So bekommt der Liner die gewünschte Form. Nach der Verfestigung des Kunststoffmaterials kann der Liner entformt werden. Der Blasdorn wird entfernt. Bevorzugt wird der Liner aus einem thermoplastischen Kunststoffmaterials zum Beispiel aus Polyamid hergestellt. Thermoplastischer Kunststoff verfestigt nach dem Erkalten.

Durch die erfindungsgemäße Durchführung des Verfahrens werden Buchse, Druckring und Federelement bereits bei der Herstellung des Liners an der gewünschten Stelle im Inneren des Liners eingebracht, derart dass sie später mit einem Boss verbunden und die erfindungsgemäße Funktion zur verbesserten Abdichtung übernehmen können. Der Druckring und das Federelement befinden sich nach der Herstellung des Liners auf der Innenseite des Liners, wobei sich das Federelement an der Buchse abstützen und den Druckring an den Liner und diesen an eine Fläche eines Bosses drücken kann, wenn die Buchse mit einem Boss verbunden wird.

Vor allem größere Drucktanks weisen an beiden Polkappen einen Boss auf. Besonders bevorzugt werden daher an beiden Polkappen des Drucktanks jeweils eine Buchse, ein Druckring und ein Federelement in der oben beschriebenen Art vorgesehen, um die Abdichtung zwischen dem Liner und dem jeweiligen Boss zu verbessern.

Im erfindungsgemäßen Verfahren kann eine zweite Buchse, ein zweiter Druckring und ein zweites Federelement derart an einer Halterung oder am Blasformwerkzeug angeordnet sein, während der Liner im Blasformverfahren hergestellt wird, dass sich der zweite Druckring und das zweite Federelement nach der Herstellung des Liners ebenfalls auf der Innenseite des Liners befinden, wobei das zweite Federelement sich an der zweiten Buchse abstützen und den zweiten Druckring an den Liner und diesen an eine Fläche eines zweiten Bosses drücken kann, wenn die zweite Buchse mit einem zweiten Boss verbunden wird.

Um eine stabile Verbindung zwischen Boss und Liner zu erzeugen, hat der jeweilige Boss bevorzugt ein Außengewinde, das in ein entsprechendes Innengewinde im Liner eingreift. Das Innengewinde im Liner wird bevorzugt nach dem Entformen aus dem Blasformwerkzeug spanend zum Beispiel durch Fräsen hergestellt. Dadurch wird verhindert, dass sich der Boss beim Eindrehen in den Liner in die Oberfläche schneiden muss und so der Liner beschädigt wird. So wird eine stabile Verbindung zwischen Boss und Liner erreicht, die auch die hohe Belastung beim Herstellen der Verstärkungsschicht, insbesondere beim Wickeln aushält. Zudem ist mit einem solchen Gewinde ein positionsgenaues und wiederholgenaues Verschrauben am Liner gegeben, so dass beide Komponenten immer gleich zueinander positioniert sind.

Weiterhin ist es vorteilhaft, wenn ein Boss mit einem Linksgewinde und der zweite Boss mit Rechtsgewinde als Außengewinde ausgestattet ist, wobei der Liner an jeder der Seiten entsprechend passende Gewinde aufweist. Dadurch können beide Boss-Liner-Verbindungen in eine gemeinsame Drehrichtung höhere Rotationskräfte aufnehmen und sind so besser gegen Entschrauben während des späteren Wickelvorgangs geschützt.

Des weiteren kann während des Blasformens der Druckring soweit in Richtung der Längsachse L relativ zur Buchse verschoben sein, dass dieser das Federelement vollständig komprimiert, so dass eine starre Kraftübertragung zwischen der Buchse und dem Druckring über das Federelement, und insbesondere über einen Anschlag am Druckring und/oder einen Anschlag an der Buchse, möglich ist.

In einem weiteren Verfahrensschritt wird ein Boss mit dem Liner und mit der Buchse verbunden, wobei die Verbindung zwischen dem Boss und der Buchse durch Aufschrauben des Bosses auf ein Außengewinde der Buchse erfolgt. Der Boss wird dabei soweit auf die Buchse aufgeschraubt, dass der Druckring in Richtung der Längsachse L relativ zur Buchse verschoben wird und dass dieser das Federelement vollständig komprimiert, bis eine starre Kraftübertragung zwischen der Buchse und dem Druckring über das Federelement und insbesondere über einen Anschlag am Druckring und/oder einen Anschlag an der Buchse, möglich ist. Die Vorteile dieser Vorgehensweise bei der Montage des Bosses sind oben bereits beschreiben worden.

In noch einem weiteren Verfahrensschritt wird das hergestellte Vorprodukt aus Liner und Boss mit Tapes aus faserverstärktem Kunststoff, insbesondere aus CFK (Kohlenfaserverstärkter Kunststoff), umwickelt zur Bildung der Verstärkungsschicht des Drucktanks. Die Tapes sind bevorzugt bereits mit einem passenden Kunststoffharz getränkt (sogenannte Towpreg), welches nach dem Wickeln ausgehärtet wird.

Anhand von Ausführungsbeispielen werden weitere vorteilhafte Merkmale der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden. Die Figuren zeigen im Einzelnen:
- **Fig.1**: Schematische Darstellung eines erfindungsgemäßen Drucktanks
- **Fig.2a**: Detailausschnitt der Anbindung zwischen Boss und Wandung bei einer erfindungsgemäßen Ausführung
- **Fig.2b**: Detailausschnitt der Anbindung zwischen Boss und Wandung bei einer weiteren erfindungsgemäßen Ausführung
- **Fig.3a,b,c**: Ausschnitt mit Darstellung verschiedener erfindungsgemäßer Ausführungen zur Abdichtung zwischen Boss und Liner
- **Fig.3d**: Ausschnitt mit Darstellung einer weiteren erfindungsgemäßen Ausführungen zur Abdichtung zwischen Boss und Liner im Betrieb des Drucktanks
- **Fig.3e**: Ausschnitt mit Darstellung einer weiteren erfindungsgemäßen Ausführungen zur Abdichtung zwischen Boss und Liner während der Montage des Bosses
- **Fig.4a**: Ausschnitt einer Anordnung zur erfindungsgemäßen Herstellung eines Drucktanks oder eines Vorproduktes dafür
- **Fig.4b**: Ausschnitt eines Vorprodukts zur Herstellung eines erfindungsgemäßen Drucktanks nach Montage des Bosses
- **Fig.5**: Detailausschnitt der Anbindung zwischen Boss und Wandung bei einer weiteren erfindungsgemäßen Ausführung
- **Fig.6a**: Ausschnitt mit Darstellung einer weiteren erfindungsgemäßen Ausführungen zur Abdichtung zwischen Boss und Liner im Betrieb des Drucktanks
- **Fig.6b**: Ausschnitt mit Darstellung einer weiteren erfindungsgemäßen Ausführungen zur Abdichtung zwischen Boss und Liner während der Montage des Bosses

Nachfolgend werden die Figuren detaillierter beschrieben. Gleiche Bezugszahlen bezeichnen gleiche beziehungsweise analoge Bauteile oder Komponenten.

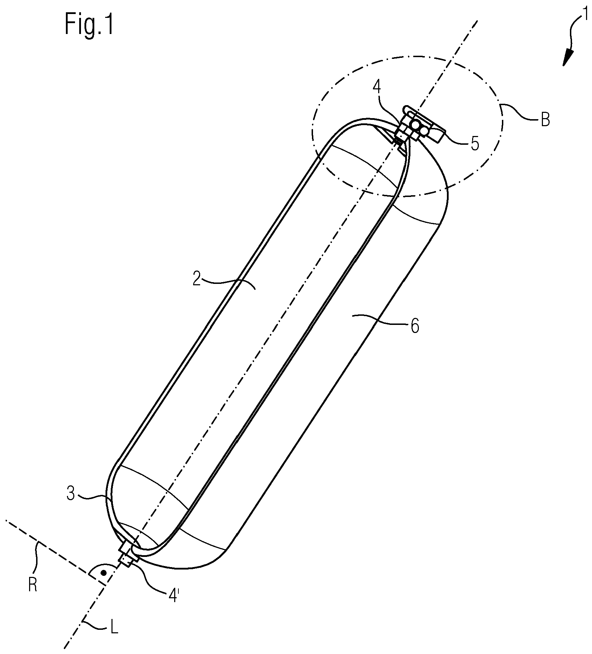

Die **Fig.1** zeigt den Drucktank 1 mit je einem Boss 4,4' an den beiden Polkappen. In den Boss 4 ist eine Tankarmatur 5 zum Füllen und zum kontrollierten Entnehmen von Gas eingeschraubt. Der Boss 4' ist mit einem Verschluss abgedichtet. Alternativ kann er ein Sicherheitsventil aufnehmen. Die Wandung des Drucktanks 1 umschließt den Hohlraum 2 und wird von einem innenliegenden Liner 3 und einer Verstärkungsschicht 6 gebildet. Der Liner 3 ist bevorzugt aus thermoplastischem Kunststoff wie beispielsweise Polyamid und wird in erfindungsgemäßen Verfahren im Blasformverfahren hergestellt. Die Verstärkungsschicht 6 wird durch ein Wickelverfahren mit Tapes aus faserverstärktem Kunststoff, bevorzugt aus CFK, hergestellt. Der Drucktank 1 ist rotationssymmetrisch um die Längsachse L. Besonderes Augenmerk muss bei solchen Drucktanks auf die Abdichtung zwischen Boss 4,4' und Liner 3 gelegt werden. Insbesondere bei großen Drucktanks, wie sie bei Nutzfahrzeugen benötigt werden, um eine ausreichende Reichweite zu ermöglichen, ist die gute Abdichtung eine schwierige Herausforderung.

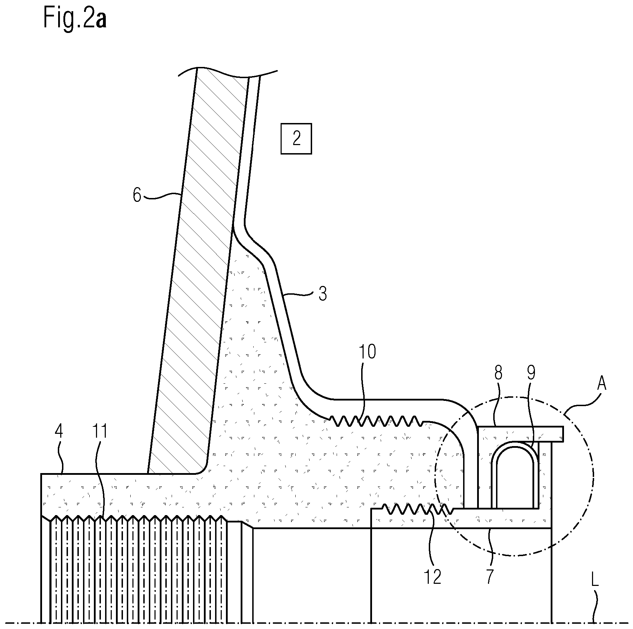

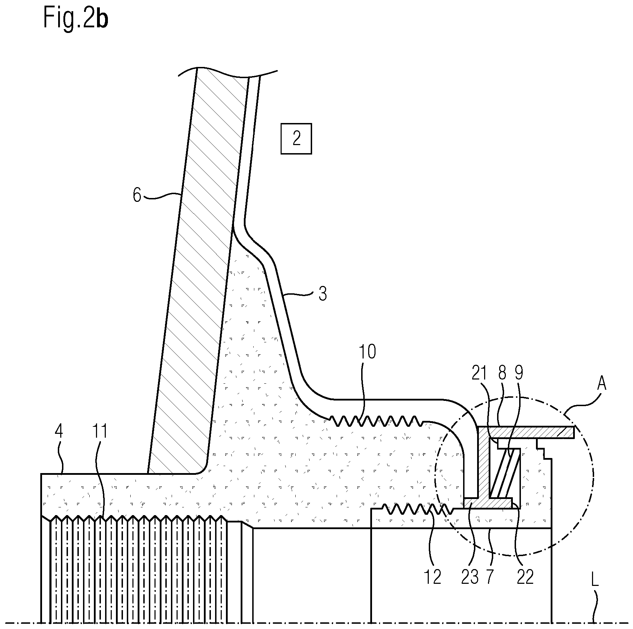

**Fig.2a** **und** **2b** zeigen den Ausschnitt B des Drucktanks 1 in Vergrößerung, so dass die erfindungsgemäße Ausführung zur verbesserten Abdichtung erkennbar wird. Es sind zwei verschieden Ausführungen dargestellt.

Der Druckring 8 und das Federelement 9 befinden sich im Inneren des Liners 3 also im Hohlraum 2. Über die Buchse 7, welche mit dem Boss 4 verbunden ist, ist das Federelement 9 vorgespannt und drückt den Druckring 8 an den Liner 3 und damit den Liner 3 an den Boss 4. Die Verbindung zwischen dem Boss 4 und der Buchse 7 ist über die Verschraubung 12 hergestellt, wobei sich auf der Buchse 7 ein entsprechendes Außengewinde befindet. Die Anpressung des Liners 3 an den Boss erfolgt nur über den Druckring 8. Dieser Druckring 8 ist beweglich gegenüber der Buchse 7 und lässt sich in Richtung der Längsachse L verschieben. Zusammen umschließen sie das Federelement 9, was dadurch gut geschützt ist. Zudem lassen sich die Komponenten dadurch gut montieren. Dazu wird ein Spezialwerkzeug verwendet, das durch die Zentralbohrung des Bosses 4 eingeführt werden kann.

In der Ausführung in Fig.2a ist das Federelement 9 als Federring mit U-förmigem Querschnitt ausgeführt. Der Druckring 8 ist auf der Seite, an der das Federelement 9 anliegt, bevorzugt so geformt, dass eine möglichst große Kontaktfläche zur Kraftübertragung genutzt wird. In diesem Fall weist der Druckring 8 eine gebogene Form auf, die dem Bogen des Federrings mit U-förmigem Querschnitt entspricht.

In der Ausführung gemäß Fig.2b weist der Druckring 8 auf der dem Liner 3 zugewandten Seite einen Kragen 23 auf. Das Federelement 9 ist in dieser Ausführung als Tellerfeder ausgebildet. Gezeigt ist eine Tellerfeder mit zwei Federtellern, es können auch auch nur ein Federteller oder mehrere Federteller vorgesehen werden. Mit der Stärke, dem Material und der Anzahl kann die Federkraft auf das gewünschte Maß eingestellt werden. Der Druckring 8 ist auf der Seite, an der das Federelement 9 anliegt, bevorzugt so geformt, dass eine gute Kraftübertragung möglich wird. Zusätzlich weist der Druckring 8 einen Anschlag 22 auf, der bei ausreichender Komprimierung des Federelements 9 an der Buchse 7 anliegt. Und die Buchse 7 weist einen Anschlag 21 auf, der bei ausreichender Komprimierung des Federelements 7 am Druckring 8 anliegt. So kann eine starre Kraftübertragung zwischen Druckring 8 und Buchse 7 hergestellt werden, wie es für die Montage des Bosses oder während des Blasformens des Liners von Vorteil ist.

Für die erfindungsgemäße Ausführung können auch andere Federelemente als hier im Beispiel gezeigt verwendet werden.

Die Fläche des Druckrings 8, welche an den Liner 3 gedrückt wird, und die Fläche des Liners 3, welche an den Boss 4 gedrückt wird, sind im Wesentlichen senkrecht zur Längsachse L ausgerichtet. Ebenso ist der Kragen der Buchse 7, an welchem sich das Federelement 9 abstützt, im Wesentlichen senkrecht zur Längsachse L angeordnet. So wird durch die Verschraubung 12 die Federkraft des Federelements 9 vollständig über den Druckring 8 auf die Dichtfläche zwischen dem Boss 4 und dem Liner 3 übertragen. Durch eine Schrägstellung dieser Flächen von maximal +/- 20° kann immer noch eine ausreichende Kraftübertragung erreicht werden. Die Schrägstellung der Dichtfläche trägt zudem zum besseren Entlüften des Dichtkragens während der Linerfertigung bei. Durch die Schrägstellung kann beim Zusammenfahren der Werkzeughälften die Luft besser aus der Quetschstelle entweichen.

Der Bereich des Bosses 4, in dem der Druckring 8 den Liner 3 an den Boss 4 drückt wird als Dichtfläche oder Drosselstelle bezeichnet. Die Abdichtung und damit die Drosselung des Gasinnendrucks im Drucktank erfolgt durch die Anpressung des Liners 3 an den Boss 4 aufgrund der Federkraft des Federelements 9 und aufgrund des Gasinnendrucks selbst.

Der Liner 3 ist über ein Gewinde 10 auf dem Boss 4 befestigt. Am Boss ist es ein Außengewinde 10 und am Liner ein Innengewinde 10. Das Innengewinde 10 am Liner ist entsprechend passend spanend bearbeitet.

Des Weiteren ist am Boss 4 das Innengewinde 11 vorhanden, über das eine Tankarmatur, ein Sicherheitsventil oder ein Verschluss eingeschraubt werden kann.

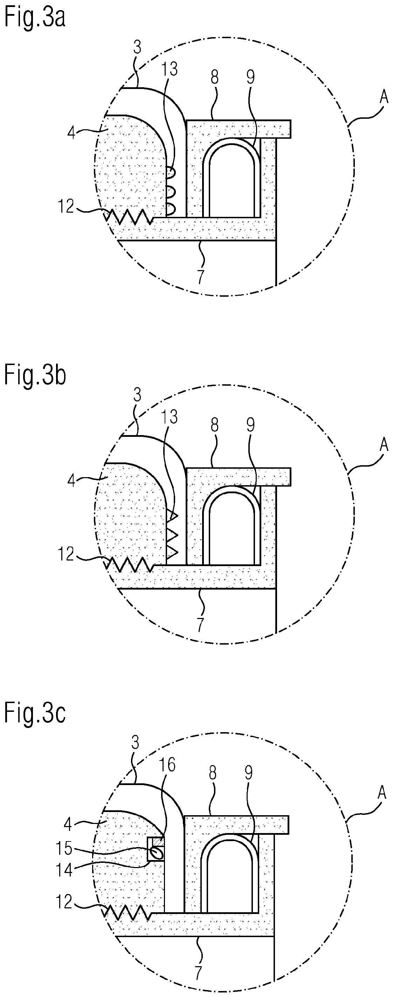

Der Ausschnitt A wird in den folgenden **Fig. 3a****-c** gezeigt. Diese Figuren zeigen weitere Ausführungen, wie der Boss 4 in dem Bereich vorteilhaft ausgeführt sein kann, in dem der Liner 3 vom Druckring 8 an den Boss gedrückt wird.

In diesem Bereich besitzt der Boss 4 anstatt einer glatten Fläche Erhebungen 13 (Fig.3a und 3b). Die Erhebungen 13 sind in diesem Fall als konzentrische Ringe auf der Fläche ausgeführt und nur einige Zehntel-Millimeter, bevorzugt zwischen 0,3 und 1,5 mm, besonders bevorzugt zwischen 0,5 und 1 mm hoch. Die Erhebungen 13 drücken sich in die Oberfläche des Liners 13 und verbessern die Dichtwirkung. Einmal sind sie mit abgerundetem oder halbrundem Querschnitt ausgeführt und einmal mit dreieckigem Querschnitt. Und auch andere Formen sind möglich.

**Fig.3c** zeigt eine weitere Variante zur Verbesserung der Abdichtung. Diese kann auch in Kombination mit den Erhebungen eingesetzt werden. Dabei wird der Dichtring 15, beispielsweise ein O-Ring, in eine Nut 14 am Boss eingelegt. Die Nut 14 befindet sich bevorzugt im Bereich des Bosses 4, an den der Liner 3 durch den Druckring 8 angedrückt wird. Die Nut kann aber auch außerhalb dieses Bereiches vorgesehen werden. Damit der Dichtring 15 bei größeren Belastungen nicht in den Spalt zwischen Boss 4 und Liner 3 gedrückt wird, kann der Stützring 16 vorgesehen werden. Der Gasinnendruck im Drucktank und die Anpressung durch das Federelement 9 sorgen dafür, dass sich der Liner 3 gleichmäßig und gut abdichtend an den Stützring 16 anlegt.

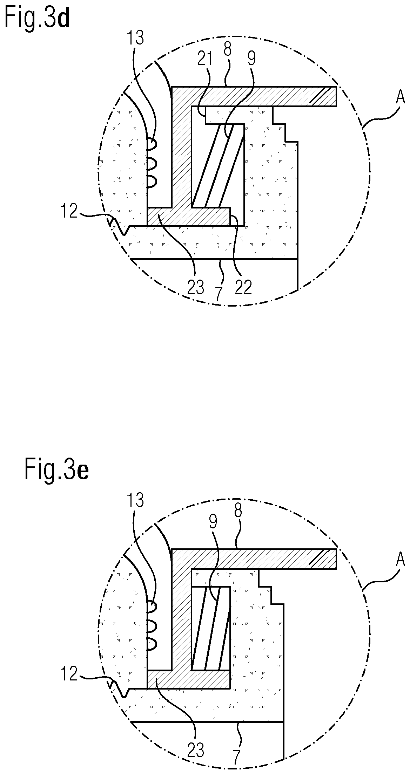

Für den Ausschnitt A wird in den folgenden Fig. 3d und 3e eine weitere Variante gezeigt. Diese Figuren zeigen in **Fig.3d** wie die Anordnung im Betrieb des Drucktanks aussieht, und in **Fig.3e** wie es nach der Montage des Bosses 4, welche nach der Herstellung des Liners im Blasformen erfolgt, aussieht.

In der Vergrößerung sind die Erhebungen 13 gezeigt, die in Fig.2 wegen der Übersichtlichkeit nicht dargestellt sind. Die Erhebungen 13 sind an der Fläche des Bosses 4 vorhanden, an die der Liner 3 durch den Druckring 8 gedrückt wird. Die Erhebungen 13 sind nicht maßstäblich, da sie sonst nicht zu sehen wären. Die Erhebungen 13 sind in diesem Fall als konzentrische Ringe auf der Fläche ausgeführt und nur einige Zehntel-Millimeter, bevorzugt zwischen 0,3 und 1,5 mm, besonders bevorzugt zwischen 0,5 und 1 mm hoch. Die Erhebungen 13 drücken sich in die Oberfläche des Liners 13 und verbessern die Dichtwirkung. Sie können beispielsweise mit abgerundetem oder halbrundem oder dreieckigem Querschnitt ausgeführt sein. Auch andere Formen sind möglich. Im Betriebszustand, wie in Fig.3a dargestellt, ist jeweils ein Spalt zwischen den Anschlägen 21, 22 und den jeweiligen Gegenflächen am Druckring beziehungsweise an der Buchse vorhanden. Die Anpressung des Druckrings 8 an den Liner 3 und damit an den Boss 4 entspricht der Federkraft des Federelements 9, zum Beispiel in der Größenordnung von 5 kN. Je nach Fülldruck und Temperatur kann sich die Spaltweite etwas ändern.

In Fig.3e ist kein Spalt zwischen den Anschlägen 21,22 und den jeweiligen Gegenflächen vorhanden. Der Boss 4 ist soweit auf die Buchse 7 aufgeschraubt beziehungsweise die Buchse 7 in den Boss 4, dass die Anschläge 21,22 auf Kontakt gehen und die Anpresskraft über die Verschraubung erhöht werden kann. So kann zum Beispiel eine Druckkraft von bis zu 40 kN aufgebracht werden, um bei der Montage die Erhebungen 13 gut in den Liner 3 einzudrücken. Unter diesem hohen Druck und während der späteren Drucktest wird das Linermaterial etwas fließen und der Liner 3 aus dem Anpressbereich zwischen Boss 4 und Druckring 8 herausgedrückt und der Liner 3 wird in diesem Bereich etwas dünner. Das erfolgt solange bis die Anschläge 21,22 einen Spalt zu ihrer jeweiligen Gegenfläche bekommen und dadurch die Anpressung auf das Niveau der Federkraft des Federelements 9 absinkt. Damit ist der Zustand, wie in Fig.3a gezeigt, erreicht.

Nicht dargestellt ist eine weitere Variante zur Verbesserung der Abdichtung. Diese kann auch in Kombination mit den Erhebungen eingesetzt werden. Dabei wird ein Dichtring beispielsweise ein O-Ring, in eine Nut am Boss eingelegt. Die Nut befindet sich bevorzugt im Bereich des Bosses 4, an den der Liner 3 durch den Druckring 8 angedrückt wird. Die Nut kann aber auch außerhalb dieses Bereiches vorgesehen werden. Damit der Dichtring bei größeren Belastungen nicht in den Spalt zwischen Boss 4 und Liner 3 gedrückt wird, kann ein Stützring vorgesehen werden. Der Gasinnendruck im Drucktank und die Anpressung durch das Federelement 9 sorgen dafür, dass sich der Liner 3 gleichmäßig und gut abdichtend an den Stützring anlegt.

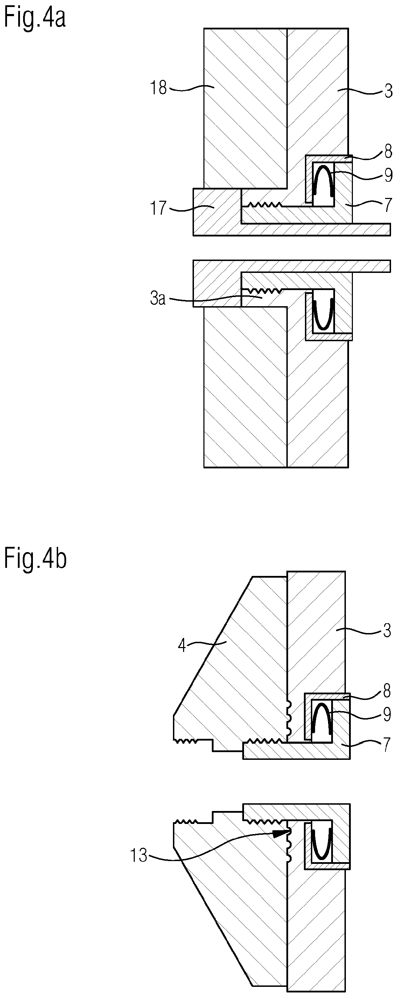

Zur Veranschaulichung des erfindungsgemäßen Verfahrens zur Herstellung eines Drucktanks zeigen die **Fig. 4a** und **4b** ebenfalls einen Ausschnitt. In **Fig.4a** ist eine Anordnung gezeigt, wie sie bei der Herstellung des Liners in verwendet wird. Auf dem Blasdorn 17 ist die Buchse 7 mit dem Druckring 8 und dem Federelement 9 montiert. Das zwei- oder mehrteilige Blasformwerkzeug 18 drückt beim Schließen das Linermaterial an den Blasdorn 17 und an die Buchse 7 sowie den Druckring 8. Das Linermaterial, bevorzugt ein thermoplastischer Kunststoff, wird zuvor als Schlauch aus einer Düse extrudiert. Ist das Blasformwerkzeug geschlossen wird über den Blasdorn, der als Mundstück fungiert, Gas eingeblasen, so dass das Linermaterial in die Blasform gedrückt wird und die gewünschte Form des Liners 3 entsteht. Nach dem Verfestigen wird das Blasformwerkzeug geöffnet und der Liner 3 entformt. Der Druckring 8 und das Federelement 9 befinden sich dann auf der Innenseite des Liners 3 im Hohlraum 2 und die Buchse 7 ist so angeordnet, dass sie später mit dem Boss 4 verbunden werden kann. Dazu wird der Teil 3a des Liners 3 entfernt, um das Außengewinde auf der Buchse 7 freizulegen. Zusätzlich kann der Liner 3 noch weiter bearbeitet werden. Beispielsweise kann ein Gewinde in die Oberfläche des Liners 3 geschnitten oder gefräst werden zur Verbindung mit einem Außengewinde auf dem Boss.

Um auch einen zweiten Boss an der gegenüberliegenden Polkappe des Drucktanks mit der erfindungsgemäßen Ausführung zur Abdichtung befestigen zu können, können bei der Herstellung eine zweite Buchse, ein zweiter Druckring und ein zweites Federelement eingebracht werden. Dazu werden die zweite Buchse, der zweite Druckring und das zweite Federelement auf der dem Blasdorn 17 gegenüberliegenden Seite an einer Halterung oder dem Blasformwerkzeug so in Position gebracht, so dass diese ähnlich wie die Bauteile auf dem Blasdorn 17 beim Herstellen des Liners ebenfalls im Inneren angeordnet sind. Auch auf diese Seite kann dann ein Boss mit der zweiten Buchse entsprechend verbunden werden.

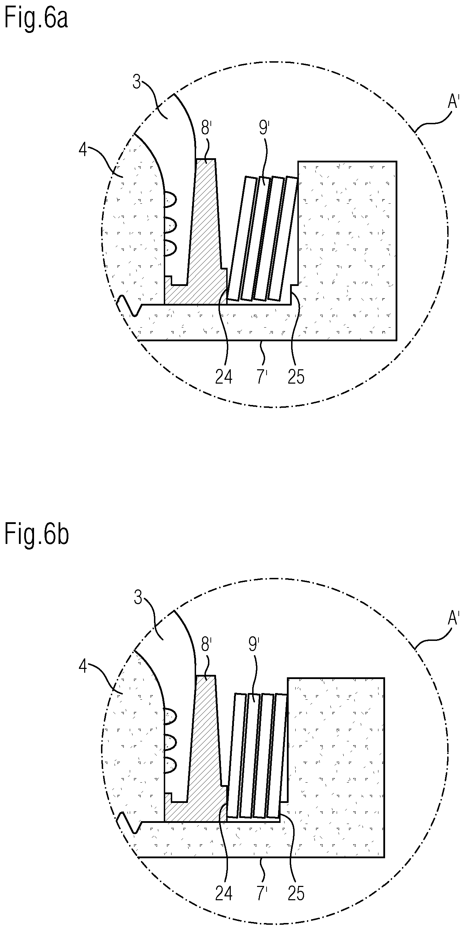

Nicht dargestellt, aber ebenfalls vorteilhaft ist die Ausführung mit den erfindungsgemäßen Varianten gemäß Fig.2b oder Fig.6a/b. Beim Blasformen kann hier der Druckring 8 das Federelement 9;9' soweit komprimieren, dass die Anordnung starr fixiert ist und während des Blasformens an der gewünschten Stelle gehalten wird. In der Ausführung nach Fig.2b liegen durch das Komprimieren des Federelements 9 die Anschläge 21 und 22 an der jeweiligen Gegenfläche am Druckring beziehungsweise an der Buchse an. In der Ausführung nach Fig.6a/b wird das Federelement 9' vollständig komprimiert, so dass die Anschläge 24 und 25 eine starre Kraftübertragung über das Federelement 9' ergeben.

**Fig.4b** zeigt den Ausschnitt nachdem der Boss 4 auf die Buchse 7 aufgeschraubt wurde. Durch die Verschraubung wird das Federelement 9 komprimiert und drückt den Druckring 8 an den Liner 3 und diesen an den Boss 4. Über die Einschraubtiefe und über die Federsteifigkeit des Federelements 9 kann die erzeugte Vorspannung eingestellt werden.

Die am Boss 4 im Bereich der Dichtfläche vorhandenen Erhebungen drücken sich in die Oberfläche des Liners 3 und erhöhen so die Dichtigkeit. Die Erhebungen sind hier als konzentrische Ringe mit abgerundetem Querschnitt ausgeführt.

Auch hier können die nicht dargestellten Varianten gemäß Fig.2b oder Fig.6a/b Vorteile bieten. Wie zuvor bereits beschrieben, können bei diesen Varianten die Federelemente 9,9' soweit komprimiert werden, dass Buchse 7 und Druckring 8 eine starre Kraftübertragung unabhängig von der Elastizität des Federelements ermöglichen.

Der in Form gebrachte Liner 3 mit den beiden aufgeschraubten Bossen 4 ist das Vorprodukt für die weitere Herstellung des Drucktanks. In einem weiteren Verfahrensschritt wird dieses Vorprodukt mit Tapes aus faserverstärktem Kunststoff umwickelt um die Verstärkungsschicht der Wandung zu bilden. Nach dem Umwickeln wird der faserverstärkte Kunststoff ausgehärtet. Bevorzugt werden dafür CFK-Tapes verwendet, die mit geeignetem Harz imprägniert sind.

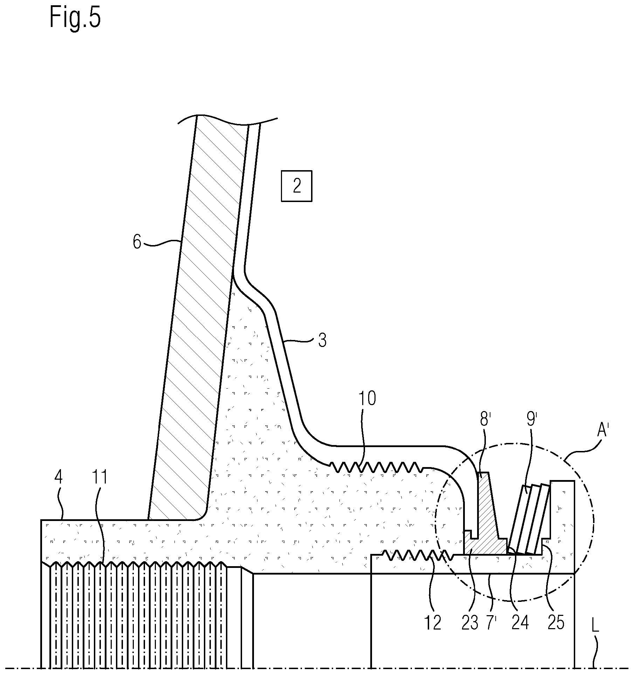

**Fig.5** zeigt wiederum den Ausschnitt B des Drucktanks 1 in Vergrößerung allerdings für eine weitere erfindungsgemäße Ausführung zur verbesserten Abdichtung. Der Druckring 8' und das Federelement 9' befinden sich im Inneren des Liners 3 also im Hohlraum 2. Über die Buchse 7', welche mit dem Boss 4 verbunden ist, ist das Federelement 9' vorgespannt und drückt den Druckring 8' an den Liner 3 und damit den Liner 3 an den Boss 4. Die Verbindung zwischen dem Boss 4 und der Buchse 7' ist über die Verschraubung 12 hergestellt, wobei sich auf der Buchse 7' ein entsprechendes Außengewinde befindet. Die Anpressung des Liners 3 an den Boss erfolgt nur über den Druckring 8'. Dieser Druckring 8' ist beweglich gegenüber der Buchse 7' und lässt sich in Richtung der Längsachse L verschieben. Geführt wird der Druckring 8'auf der Buchse 7'über seinen Innendurchmesser. Der Druckring 8' und die Buchse 7' können bei dieser Ausführung sehr schlank und bauraumsparend ausgeführt werden.

Der Druckring 8 weist auf der dem Liner 3 zugewandten Seite einen Kragen 23 auf.

Das Federelement 9' ist in dieser Ausführung als Tellerfeder ausgebildet. Gezeigt ist eine Tellerfeder mit vier Federtellern, es können auch nur ein Federteller oder mehrere Federteller vorgesehen werden. Mit der Stärke, dem Material und der Anzahl kann die Federkraft auf das gewünschte Maß eingestellt werden.

Die Fläche des Druckrings 8', welche an den Liner 3 gedrückt wird, und die Fläche des Liners 3, welche an den Boss 4 gedrückt wird, sind im Wesentlichen senkrecht zur Längsachse L ausgerichtet. Ebenso ist der Kragen der Buchse 7', an welchem sich das Federelement 9' abstützt, im Wesentlichen senkrecht zur Längsachse L angeordnet. So wird durch die Verschraubung 12 die Federkraft des Federelements 9' vollständig über den Druckring 8 auf die Dichtfläche zwischen dem Boss 4 und dem Liner 3 übertragen. Durch eine Schrägstellung dieser Flächen von maximal +/- 20° kann immer noch eine ausreichende Kraftübertragung erreicht werden. Die Schrägstellung der Dichtfläche trägt zudem zum besseren Entlüften des Dichtkragens während der Linerfertigung bei. Durch die Schrägstellung kann beim Zusammenfahren der Werkzeughälften die Luft besser aus der Quetschstelle entweichen.

Der Bereich des Bosses 4, in dem der Druckring 8' den Liner 3 an den Boss 4 drückt wird als Dichtfläche oder Drosselstelle bezeichnet. Die Abdichtung und damit die Drosselung des Gasinnendrucks im Drucktank erfolgt durch die Anpressung des Liners 3 an den Boss 4 aufgrund der Federkraft des Federelements 9' und aufgrund des Gasinnendrucks selbst.

Der Druckring 8' ist auf der Seite, an der das Federelement 9' anliegt, bevorzugt so geformt, dass eine gute Kraftübertragung möglich wird. Insbesondere kann der Anschlag 24 am Druckring vorgesehen sein, an dem das Federelement 9' anliegt.

Für die erfindungsgemäße Ausführung können auch andere Federelemente als hier im Beispiel gezeigt verwendet werden.

Der Liner 3 ist über ein Gewinde 10 auf dem Boss 4 befestigt. Am Boss ist es ein Außengewinde 10 und am Liner ein Innengewinde 10. Das Innengewinde 10 am Liner ist entsprechend passend spanend bearbeitet.

Des Weiteren ist am Boss 4 das Innengewinde 11 vorhanden, über das eine Tankarmatur, ein Sicherheitsventil oder ein Verschluss eingeschraubt werden kann.

Der Ausschnitt A' wird in den folgenden Fig. 6a und 6b gezeigt. Diese Figuren zeigen in **Fig.6a** wie die Anordnung im Betrieb des Drucktanks aussieht, und in **Fig.6b** wie es nach der Montage des Bosses 4, welche nach der Herstellung des Liners im Blasformen erfolgt, aussieht. Weitere Details gelten analog wie sie bereits oben in der Figurenbeschreibung zu den ähnlichen Fig.3a und 3b genannt sind.

Der wesentliche Unterschied bei der hier gezeigten Variante ist, dass die Buchse 7' und vor allem der Druckring 8' schlanker und platzsparender ausgeführt sind. Das ist ein großer Vorteil in Anwendungen, bei denen wenig Bauraum und ein möglichst geringes Gewicht angestrebt wird.

Fig.6a zeigt, dass im Betrieb die Anpressung zwischen Druckring 8' und Liner 3 über das Federelement 9' erfolgt, welches sich am Kragen der Buchse 7' abstützt. Zwischen dem Anschlag 25 an der Buchse und dem Federelement 9' ist ein Spalt vorhanden. Die Buchse 7' ist über das nicht vollständig dargestellte Außengewinde 12 mit dem Boss 4 verbunden. Je nach Anzahl und Auswahl der Federteller für das Federelement 9', sowie je nach Abstand zwischen Druckring 8' und Buchse 7' kann die Druckkraft an der Fläche zum Liner 3 eingestellt werden.

In Fig.6b ist das Federelement 9' vollständig komprimiert, so dass eine starre Kraftübertragung von der Buchse 7' auf den Druckring 8' erfolgt. In der gezeigten Ausführung ist das realisiert, indem der Anschlag 25 der Buchse über das Federelement 9' auf den Anschlag 24 am Druckring 8' drückt. Um das zu erreichen ist der Boss 4 soweit auf die Buchse 7' aufgeschraubt beziehungsweise die Buchse 7' in den Boss 4, dass die Anschläge 24,25 das Federelement 9' komplett zusammendrücken und eine starre Kraftübertragung über das Federelement 9' ohne elastischen Einfluss ermöglichen. So kann wie zuvor bereits beschrieben eine hohe Druckkraft aufgebracht werden, um bei der Montage die Erhebungen 13 gut in den Liner 3 einzudrücken. Unter diesem hohen Druck und während der späteren Drucktests wird das Linermaterial etwas fließen und der Liner 3 aus dem Anpressbereich zwischen Boss 4 und Druckring 8' herausgedrückt. Der Liner 3 wird in diesem Bereich etwas dünner. Das erfolgt solange bis ein Spalt zwischen Federelement und Anschlag 25 entsteht und dadurch die Anpressung auf das Niveau der Federkraft des Federelements 9 absinkt. Damit ist der Zustand, wie in Fig.6a gezeigt, erreicht.

Des Weiteren ist in dieser Ausführung die Kontaktfläche zum Abdichten zwischen Druckring 8' und Liner 3 geneigt gegenüber der Senkrechten zur Längsachse L ausgeführt. Insbesondere ist eine Neigung bis zu 20° vorteilhaft. Eventuelle Lufteinschlüsse zwischen Liner 3 und Druckring 8' können durch die Schrägstellung beim Einschrauben in den Boss 4 aus der Dichtfläche radial herausgedrückt werden. Das erleichtert eine zuverlässige Montage.

Nicht dargestellt ist eine weitere Variante zur Verbesserung der Abdichtung. Diese kann auch in Kombination mit den Erhebungen eingesetzt werden. Dabei wird ein Dichtring beispielsweise ein O-Ring, in eine Nut am Boss eingelegt. Die Nut befindet sich bevorzugt im Bereich des Bosses 4, an den der Liner 3 durch den Druckring 8 angedrückt wird. Die Nut kann aber auch außerhalb dieses Bereiches vorgesehen werden. Damit der Dichtring bei größeren Belastungen nicht in den Spalt zwischen Boss 4 und Liner 3 gedrückt wird, kann ein Stützring vorgesehen werden. Der Gasinnendruck im Drucktank und die Anpressung durch das Federelement 9 sorgen dafür, dass sich der Liner 3 gleichmäßig und gut abdichtend an den Stützring anlegt.

### Bezugszeichenliste

- 1: Drucktank
- 2: Hohlraum
- 3: Liner
- 3a: Teil des Liners
- 4, 4': Boss
- 5: Tankarmatur
- 6: Verstärkungsschicht
- 7, 7': Buchse
- 8, 8': Druckring
- 9, 9': Federelement
- 10: Außengewinde
- 11: Innengewinde
- 12: Schraubgewinde
- 13: Erhebungen
- 14: Nut
- 15: Dichtring
- 16: Stützring
- 17: Blasdorn
- 18: Blasformwerkzeug

- 21: Anschlag an Buchse
- 22: Anschlag an Druckring
- 23: Kragen an Druckring
- 24: Anschlag an Druckring
- 25: Anschlag an Buchse

- L: Längsachse des Drucktanks
- R: Radialrichtung des Drucktanks

## Patentansprüche

1. Drucktank (1) für die Speicherung von Gas zur Montage in einem gasbetriebenen Fahrzeug, der eine rotationssymmetrische, langgestreckte Form hat, die im Mittelbereich zylinderförmig und an beiden Enden mit gewölbten Polkappen abgeschlossen ist, und der eine Wandung, die einen Hohlraum (2) zur Speicherung des Gases umschließt, sowie je ein metallisches Anschlussstück, einen sogenannten Boss (4,4'), an jeder der Polkappen aufweist, wobei die Wandung eine Verstärkungsschicht (6) aus faserverstärktem Kunststoff und einen innenliegenden Liner (3) zur Abdichtung umfasst,
wobei zur Abdichtung eine mit dem Boss (4,4') verbundene Buchse (7,7'), ein Druckring (8,8') und ein Federelement (9,9') vorhanden sind, derart gestaltet, dass das Federelement (9,9') sich an der Buchse (7,7') abstützt und den Druckring (8,8') an den Liner (3) und diesen dadurch in einem Bereich an den Boss (4,4') drückt,
**dadurch gekennzeichnet,**
**dass** der Druckring (8) zusammen mit der Buchse (7) das Federelement (9) vollständig umschließt.

2. Drucktank (1) nach Anspruch 1
**dadurch gekennzeichnet,**
**dass** der Druckring (8,8') den Liner (3) mit einer Fläche berührt, die einen Winkel zur Längsachse L zwischen 70° und 110° bildet, und die insbesondere im Wesentlichen senkrecht zur Längsachse L ausgerichtet ist.

3. Drucktank (1) nach einem der Ansprüche 1 oder 2
**dadurch gekennzeichnet,**
**dass** die Buchse (7,7') über ein Schraubgewinde am Boss (4,4') befestigt ist, insbesondere derart, dass die Federkraft, mit der der Druckring (8,8') angedrückt wird, darüber verändert werden kann.

4. Drucktank (1) nach einem der vorherigen Ansprüche
**dadurch gekennzeichnet,**
**dass** die Buchse (7,7') einen Kragen aufweist, an dem sich das Federelement (9,9') abstützt, wobei der Kragen im Wesentlichen senkrecht zur Längsachse L des Drucktanks angeordnet ist.

5. Drucktank (1) nach einem der vorherigen Ansprüche
**dadurch gekennzeichnet,**
**dass** der Boss (4,4') ein Außengewinde (10) aufweist, welches in Kontakt mit einem dazu passenden Innengewinde des Liners (3) ist und welches konzentrisch zur Längsachse L angeordnet ist.

6. Drucktank (1) nach einem der vorherigen Ansprüche
**dadurch gekennzeichnet,**
**dass** sich die Fläche des Druckrings (8,8'), die an den Liner (3) gedrückt wird, in Radialrichtung R mindestens 20 mm, bevorzugt mindestens 30 mm erstreckt.

7. Drucktank (1) nach einem der vorherigen Ansprüche
**dadurch gekennzeichnet,**
**dass** der Boss (4,4') Erhebungen (13) aufweist, die sich in dem Bereich des Bosses (4,4') befinden, in dem der Liner (3) durch den Druckring (8,8') an den Boss angedrückt wird, wobei die Erhebungen (13) bevorzugt eine Höhe zwischen 0,3 mm und 1,5 mm aufweisen, besonders bevorzugt zwischen 0,5 mm und 1 mm.

8. Drucktank (1) nach einem der vorherigen Ansprüche
**dadurch gekennzeichnet,**
**dass** der Druckring (8,8') gegenüber der Buchse (7,7') in Richtung der Längsachse L verschiebbar ist.

9. Drucktank (1) nach Anspruch 8
**dadurch gekennzeichnet,**
**dass** der Druckring (8) einen Anschlag (22) und/oder die Buchse (7) einen Anschlag (21) aufweist, derart gestaltet, dass eine Kraftübertragung zwischen Druckring (8) und Buchse (7) in Richtung der Längsachse L direkt über den Anschlag (22) und/oder direkt über den Anschlag (21) möglich ist, wenn das Federelement (9) ausreichend stark komprimiert ist.

10. Drucktank (1) nach Anspruch 8
**dadurch gekennzeichnet,**
**dass** der Druckring (8') einen Anschlag (24) und/oder die Buchse (7') einen Anschlag (25) aufweist, derart gestaltet, dass eine starre Kraftübertragung zwischen Druckring (8') und Buchse (7') in Richtung der Längsachse L über das vollständig komprimierte Federelement (9') möglich ist.

11. Verfahren zur Herstellung eines Drucktanks (1) nach einem der vorherigen Ansprüche,
wobei für den Aufbau der Wandung des Drucktanks (1) ein Liner (3) in einem Blasformverfahren hergestellt wird, welcher den Hohlraum (2) zur Speicherung des Gases umschließt,
**dadurch gekennzeichnet,**
**dass** eine mit einem Boss (4,4') verbindbare Buchse (7,7'), ein Druckring (8,8') und ein Federelement (9,9') an einem Blasdorn (17) angeordnet sind, während der Liner (3) im Blasformverfahren hergestellt wird, derart dass sich der Druckring (8,8') und das Federelement (9,9') nach der Herstellung des Liners (3) auf der Innenseite des Liners befinden, wobei das Federelement (9,9') sich an der Buchse (7,7') abstützen und den Druckring (8,8') an den Liner (3) und diesen an eine Fläche eines Bosses (4,4') drücken kann, wenn die Buchse (7,7') mit einem Boss (4,4') verbunden wird.

12. Verfahren nach Anspruch 11,
**dadurch gekennzeichnet,**
**dass** während des Blasformens der Druckring (8) soweit in Richtung der Längsachse L relativ zur Buchse (7) verschoben ist, dass dieser das Federelement (9) derart komprimiert, dass ein Anschlag (21) an der Buchse (7) mit dem Druckring (8) und/oder ein Anschlag (22) am Druckring (8) mit der Buchse (7) in direkten Kontakt zur Kraftübertragung kommen.

13. Verfahren nach einem der Ansprüche 11 oder 12,
**dadurch gekennzeichnet,**
**dass** in einem weiteren Verfahrensschritt ein Boss (4,4') mit dem Liner (3) und mit der Buchse (7) verbunden wird, wobei die Verbindung zwischen dem Boss (4,4') und der Buchse (7) durch Aufschrauben des Bosses (4,4') auf ein Außengewinde (12) der Buchse (7) erfolgt, und wobei der Boss (4,4') soweit auf die Buchse (7) aufgeschraubt wird, dass der Druckring (8) in Richtung der Längsachse L relativ zur Buchse (7) verschoben wird und dass dieser das Federelement (9) komprimiert, bis ein Anschlag (21) an der Buchse (7) mit dem Druckring (8) und/oder ein Anschlag (22) am Druckring (8) mit der Buchse (7) in direkten Kontakt mit einer jeweiligen Gegenfläche an der Buchse (7) beziehungsweise am Druckring (8) zur Kraftübertragung kommen.

14. Verfahren nach Anspruch 11,
**dadurch gekennzeichnet,**
**dass** während des Blasformens der Druckring (8') soweit in Richtung der Längsachse L relativ zur Buchse (7') verschiebt, dass dieser das Federelement (9') vollständig komprimiert, so dass eine starre Kraftübertragung zwischen der Buchse (7') und dem Druckring (8') über das Federelement (9'), und insbesondere über einen Anschlag (24) am Druckring und/oder einen Anschlag (25) an der Buchse, möglich ist.

15. Verfahren nach einem der Ansprüche 11 oder 12,
**dadurch gekennzeichnet,**
**dass** in einem weiteren Verfahrensschritt ein Boss (4,4') mit dem Liner (3) und mit der Buchse (7') verbunden wird, wobei die Verbindung zwischen dem Boss (4,4') und der Buchse (7') durch Aufschrauben des Bosses (4,4') auf ein Außengewinde (12) der Buchse (7') erfolgt, und wobei der Boss (4,4') soweit auf die Buchse (7') aufgeschraubt wird, dass der Druckring (8') in Richtung der Längsachse L relativ zur Buchse (7') verschoben wird und dass dieser das Federelement (9') vollständig komprimiert, bis eine starre Kraftübertragung zwischen der Buchse (7') und dem Druckring (8') über das Federelement (9') und insbesondere über einen Anschlag (24) am Druckring und/oder einen Anschlag (25) an der Buchse, möglich ist.

## Claims

1. Pressure tank (1) for storage of gas for assembly in a gas-powered vehicle, which has a rotationally symmetrical elongate form which is cylindrical in the central region and which is closed at both ends with curved pole caps, and which has a wall which surrounds a hollow space (2) for storing the gas, and a metal connection piece, a so-called boss (4, 4'), on each of the pole caps, wherein the wall comprises a reinforcement layer (6) made of fibre-reinforced plastics material and an inner liner (3) for sealing,
wherein for sealing a bush (7, 7') which is connected to the boss (4, 4'), a pressure ring (8, 8') and a resilient element (9, 9') are provided and configured in such a manner that the resilient element (9, 9') is supported on the bush (7, 7') and presses the pressure ring (8, 8') onto the liner (3) and thereby presses the liner in a region onto the boss (4, 4'),
**characterized in that**
the pressure ring (8) together with the bush (7) completely surrounds the resilient element (9).

2. Pressure tank (1) according to Claim 1,
**characterized in that**
the pressure ring (8, 8') touches the liner (3) with a face which forms an angle with respect to the longitudinal axis L between 70° and 110° and which is orientated in particular substantially perpendicularly to the longitudinal axis L.

3. Pressure tank (1) according to one of Claims 1 or 2,
**characterized in that**
the bush (7, 7') is secured to the boss (4, 4') by means of a screw thread, in particular in such a manner that the resilient force with which the pressure ring (8, 8') is pressed can thereby be changed.

4. Pressure tank (1) according to one of the preceding claims,
**characterized in that**
the bush (7, 7') has a collar on which the resilient element (9, 9') is supported, wherein the collar is arranged substantially perpendicularly to the longitudinal axis L of the pressure tank.

5. Pressure tank (1) according to one of the preceding claims,
**characterized in that**
the boss (4, 4') has an outer thread (10) which is in contact with a fitting inner thread of the liner (3) and which is arranged concentrically relative to the longitudinal axis L.

6. Pressure tank (1) according to one of the preceding claims,
**characterized in that**
the face, which is pressed onto the liner (3), of the pressure ring (8, 8') extends in a radial direction R at least 20 mm, preferably at least 30 mm.

7. Pressure tank (1) according to one of the preceding claims,
**characterized in that**
the boss (4, 4') has projections (13) which are located in the region of the boss (4, 4') in which the liner (3) is pressed onto the boss by the pressure ring (8, 8'), wherein the projections (13) preferably have a height between 0.3 mm and 1.5 mm, in a particularly preferred manner between 0.5 mm and 1 mm.

8. Pressure tank (1) according to one of the preceding claims,
**characterized in that**
the pressure ring (8, 8') can be displaced relative to the bush (7, 7') in the direction of the longitudinal axis L.

9. Pressure tank (1) according to Claim 8,
**characterized in that**
the pressure ring (8) has a stop (22) and/or the bush (7) has a stop (21) which are configured in such a manner that a force transmission between the pressure ring (8) and bush (7) is possible in the direction of the longitudinal axis L directly via the stop (22) and/or directly via the stop (21) when the resilient element (9) is compressed to a sufficient degree.

10. Pressure tank (1) according to Claim 8,
**characterized in that**
the pressure ring (8') has a stop (24) and/or the bush (7') has a stop (25) which are configured in such a manner that a rigid force transmission between the pressure ring (8') and bush (7') is possible in the direction of the longitudinal axis L via the completely compressed resilient element (9').

11. Method for producing a pressure tank (1) according to any one of the preceding claims, wherein for the construction of the wall of the pressure tank (1) a liner (3) which surrounds the hollow space (2) for storing the gas is produced by a blow-moulding method,
**characterized in that**
a bush (7, 7') which can be connected to a boss (4, 4'), a pressure ring (8, 8') and a resilient element (9, 9') are arranged on a blow pin (17), whilst the liner (3) is produced by the blow-moulding method in such a manner that the pressure ring (8, 8') and the resilient element (9, 9') are located after production of the liner (3) on the inner side of the liner, wherein the resilient element (9, 9') can be supported on the bush (7, 7') and can press the pressure ring (8, 8') onto the liner (3) and can press the latter onto a face of a boss (4, 4') when the bush (7, 7') is connected to a boss (4, 4').

12. Method according to Claim 11,
**characterized in that**
during the blow-moulding the pressure ring (8) is displaced so far in the direction of the longitudinal axis L relative to the bush (7) that it compresses the resilient element (9) in such a manner that a stop (21) on the bush (7) comes into direct contact with the pressure ring (8) and/or a stop (22) on the pressure ring (8) comes into direct contact with the bush (7) for force transmission.

13. Method according to one of Claims 11 or 12,
**characterized in that**
in another method step a boss (4, 4') is connected to the liner (3) and to the bush (7), wherein the connection between the boss (4, 4') and the bush (7) is carried out by screwing the boss (4, 4') onto an outer thread (12) of the bush (7), and wherein the boss (4, 4') is screwed so far onto the bush (7) that the pressure ring (8) is displaced in the direction of the longitudinal axis L relative to the bush (7) and **in that** it compresses the resilient element (9) until a stop (21) on the bush (7) with the pressure ring (8) and/or a stop (22) on the pressure ring (8) with the bush (7) comes into direct contact with a respective counter-face on the bush (7) or on the pressure ring (8) for force transmission.

14. Method according to Claim 11,
**characterized in that**
during the blow-moulding the pressure ring (8') is displaced so far in the direction of the longitudinal axis L relative to the bush (7') that it completely compresses the resilient element (9') so that a rigid force transmission between the bush (7') and the pressure ring (8') via the resilient element (9'), and in particular via a stop (24) on the pressure ring and/or a stop (25) on the bush, is possible.

15. Method according to one of Claims 11 or 12,
**characterized in that**
in another method step a boss (4, 4') is connected to the liner (3) and to the bush (7'), wherein the connection between the boss (4, 4') and the bush (7') is carried out by screwing the boss (4, 4') onto an outer thread (12) of the bush (7'), and wherein the boss (4, 4') is screwed so far onto the bush (7') that the pressure ring (8') is displaced in the direction of the longitudinal axis L relative to the bush (7') and **in that** it compresses the resilient element (9') completely until a rigid force transmission between the bush (7') and the pressure ring (8') is possible via the resilient element (9') and particularly via a stop (24) on the pressure ring and/or a stop (25) on the bush.

## Revendications

1. Réservoir sous pression (1) destiné à stocker du gaz et à être monté dans un véhicule fonctionnant au gaz, présentant une forme allongée à symétrie de révolution qui est cylindrique dans la zone médiane et fermée aux deux extrémités par des capuchons polaires bombés, et qui présente une paroi qui entoure une cavité (2) destinée à stocker le gaz, ainsi que respectivement une pièce de raccordement métallique, un dit cabochon (4, 4') au niveau de chacun des capuchons polaires, dans lequel la paroi comprend une couche de renforcement (6) en matière plastique renforcée par des fibres et un revêtement interne (3) pour l'étanchéité,
dans lequel une douille (7, 7') reliée au cabochon (4, 4'), une bague de pression (8, 8') et un élément faisant ressort (9, 9') sont présents pour l'étanchéité, et sont configurés de telle sorte que l'élément faisant ressort (9, 9') prend appui sur la douille (7, 7') et plaque la bague de pression (8, 8') contre le revêtement (3) et plaque celui-ci ainsi dans une zone contre le cabochon (4, 4'),
**caractérisé en ce**
**que** la bague de pression (8) avec la douille (7) entoure entièrement l'élément faisant ressort (9).

2. Réservoir sous pression (1) selon la revendication 1,
**caractérisé en ce**
**que** la bague de pression (8, 8') touche le revêtement (3) par une surface qui forme un angle par rapport à l'axe longitudinal L compris entre 70° et 110°, et qui est aligné en particulier perpendiculairement à l'axe longitudinal L.

3. Réservoir sous pression (1) selon l'une quelconque des revendications 1 ou 2,
**caractérisé en ce**
**que** la douille (7, 7') est fixée au cabochon (4, 4') par l'intermédiaire d'un filetage de vis, en particulier de telle sorte que la force de ressort avec laquelle la bague de pression (8, 8') est plaquée peut être modifiée de ce fait.

4. Réservoir sous pression (1) selon l'une quelconque des revendications précédentes,
**caractérisé en ce**
**que** la douille (7, 7') présente une collerette sur laquelle l'élément faisant ressort (9, 9') prend appui, la collerette étant disposée de manière substantiellement perpendiculaire à l'axe longitudinal L du réservoir sous pression.

5. Réservoir sous pression (1) selon l'une quelconque des revendications précédentes,
**caractérisé en ce**
**que** le cabochon (4, 4') présente un filetage extérieur (10) qui est en contact avec un filetage intérieur du revêtement (3), apparié à celui-ci, et qui est disposé de manière concentrique par rapport à l'axe longitudinal L.

6. Réservoir sous pression (1) selon l'une quelconque des revendications précédentes,
**caractérisé en ce**
**que** la surface de la bague de pression (8, 8') qui est plaquée contre le revêtement (3) s'étend dans la direction radiale R sur au moins 20 mm, de préférence au moins 30 mm.

7. Réservoir sous pression (1) selon l'une quelconque des revendications précédentes,
**caractérisé en ce**
**que** le cabochon (4, 4') présente des bossages (13) qui se trouvent dans la zone du cabochon (4, 4') dans laquelle le revêtement (3) est plaqué contre le cabochon par la bague de pression (8, 8'), les bossages (13) présentant de préférence une hauteur comprise entre 0,3 mm et 1,5 mm, de manière particulièrement préférée entre 0,5 mm et 1 mm.

8. Réservoir sous pression (1) selon l'une quelconque des revendications précédentes,
**caractérisé en ce**
**que** la bague de pression (8, 8') est coulissante par rapport à la douille (7, 7') en direction de l'axe longitudinal L.

9. Réservoir sous pression (1) selon la revendication 8,
**caractérisé en ce**
**que** la bague de pression (8) présente une butée (22) et/ou la douille (7) présente une butée (21) qui sont configurées de telle sorte qu'une transmission de force entre la bague de pression (8) et la douille (7) en direction de l'axe longitudinal L est possible directement par l'intermédiaire de la butée (22) et/ou directement par l'intermédiaire de la butée (21) lorsque l'élément faisant ressort (9) est comprimé avec suffisamment de force.

10. Réservoir sous pression (1) selon la revendication 8,
**caractérisé en ce**
**que** la bague de pression (8') présente une butée (24) et/ou la douille (7') présente une butée (25) qui sont configurées de telle sorte qu'une transmission de force rigide entre la bague de pression (8') et la douille (7') en direction de l'axe longitudinal L est possible par l'intermédiaire de l'élément faisant ressort (9') entièrement comprimé.

11. Procédé de fabrication d'un réservoir sous pression (1) selon l'une quelconque des revendications précédentes, dans lequel, pour la construction de la paroi du réservoir sous pression (1), un revêtement (3) qui entoure la cavité (2) pour le stockage du gaz est fabriqué par un procédé de moulage par soufflage,
**caractérisé en ce**
**qu'**une douille (7, 7') pouvant être reliée au cabochon (4, 4'), une bague de pression (8, 8') et un élément faisant ressort (9, 9') sont disposés sur un mandrin de soufflage (17) pendant que le revêtement (3) est fabriqué par un procédé de moulage par soufflage de telle sorte que la bague de pression (8, 8') et l'élément faisant ressort (9, 9') se trouvent sur la face intérieure du revêtement après la fabrication du revêtement (3), dans lequel l'élément faisant ressort (9, 9') peut prendre appui sur la douille (7, 7') et plaquer la bague de pression (8, 8') contre le revêtement (3) et plaquer celui-ci contre une surface d'un cabochon (4, 4') lorsque la douille (7, 7') est reliée à un cabochon (4, 4').

12. Procédé selon la revendication 11,
**caractérisé en ce**
**que** pendant le moulage par soufflage, la bague de pression (8) est déplacée en direction de l'axe longitudinal L par rapport à la douille (7) à tel point qu'elle comprime l'élément faisant ressort (9) de telle sorte qu'une butée (21) sur la douille (7) entre en contact direct avec la bague de pression (8) et/ou une butée (22) sur la bague de pression (8) entre en contact direct avec la douille (7) pour la transmission de force.

13. Procédé selon l'une quelconque des revendications 11 ou 12,
**caractérisé en ce**
**que** dans une étape de procédé supplémentaire, un cabochon (4, 4') est relié au revêtement (3) et à la douille (7), dans lequel la liaison entre le cabochon (4, 4') et la douille (7) est effectuée par le vissage du cabochon (4, 4') sur un filetage extérieur (12) de la douille (7), et dans lequel le cabochon (4, 4') est vissé sur la douille (7) à tel point que la bague de pression (8) est déplacée en direction de l'axe longitudinal L par rapport à la douille (7), et **en ce que** celle-ci comprime l'élément faisant ressort (9) jusqu'à ce qu'une butée (21) sur la douille (7) entre en contact direct avec la bague de pression (8), et/ou une butée (22) sur la bague de pression (8) entre en contact direct avec la douille (7) avec une surface complémentaire respective sur la douille (7) ou la bague de pression (8) pour la transmission de force.

14. Procédé selon la revendication 11,
**caractérisé en ce**
**que** pendant le moulage par soufflage, la bague de pression (8') se déplace en direction de l'axe longitudinal L par rapport à la douille (7') à tel point que celle-ci comprime entièrement l'élément faisant ressort (9') de sorte qu'une transmission de force rigide entre la douille (7') et la bague de pression (8') est possible par l'intermédiaire de l'élément faisant ressort (9') et en particulier par l'intermédiaire d'une butée (24) sur la bague de pression et/ou d'une butée (25) sur la douille.

15. Procédé selon l'une quelconque des revendications 11 ou 12,
**caractérisé en ce**
**que** dans une étape de procédé supplémentaire, un cabochon (4, 4') est relié au revêtement (3) et à la douille (7'), dans lequel la liaison entre le cabochon (4, 4') et la douille (7') est effectuée par le vissage du cabochon (4, 4') sur un filetage extérieur (12) de la douille (7'), et dans lequel le cabochon (4, 4') est vissé sur la douille (7') à tel point que la bague de pression (8') est déplacée dans la direction de l'axe longitudinal L par rapport à la douille (7'), et **en ce que** celle-ci comprime entièrement l'élément faisant ressort (9') jusqu'à ce qu'une transmission de force rigide entre la douille (7') et la bague de pression (8') soit possible par l'intermédiaire de l'élément faisant ressort (9') et en particulier par l'intermédiaire d'une butée (24) sur la bague de pression et/ou d'une butée (25) sur la douille.
